# EUROPÄISCHE PATENTANMELDUNG

(11) **EP 4 286 158 A1**
(43) Veröffentlichungstag der Anmeldung: **06.12.2023**
(21) Anmeldenummer: 23163665.5
(22) Anmeldetag: 23.03.2023
(51) Int. Cl.: B33Y 10/00, B33Y 80/00, B60R 13/02, B62D 29/04

(54) **ADDITIV HERGESTELLTES VERKLEIDUNGSBAUTEIL MIT HYBRIDSTRUKTUR**

(30) Priorität: 31.05.2022 DE 102022205549
(71) Anmelder: Siemens Mobility GmbH, 81739 München (DE)
(72) Erfinder: Bialoscek, Andre, 91094 Langensendelbach (DE); Landkammer, Stefan, 91161 Hilpoltstein (DE)
(74) Vertreter: Siemens Patent Attorneys

(57) **Zusammenfassung**

Es wird ein Verfahren zum Herstellen eines Verkleidungsbauteils (1, 1', 1", 1‴) mit Hybridstruktur für ein Fahrzeug beschrieben. Bei dem Verfahren wird eine Schalenstruktur (2, 2', 2"), welche einen Innenraum umgibt, additiv hergestellt. Zumindest ein Teil des Innenraums der Schalenstruktur (2, 2', 2") wird mit einer Füllstruktur (3, 3', 3", 3‴) ausgekleidet. Es wird auch ein Verkleidungsbauteil (1, 1', 1", 1‴) für ein Fahrzeug beschrieben.

## Beschreibung

Die Erfindung betrifft ein Verfahren zum Herstellen eines Verkleidungsbauteils mit Hybridstruktur für ein Fahrzeug. Außerdem betrifft die Erfindung ein Verkleidungsbauteil mit Hybridstruktur für ein Fahrzeug.

Im Karosseriebau werden Fahrzeugverkleidungsbauteile aus Kunststoff eingesetzt. Diese Bauteile weisen große Flächen auf, die vielseitigen Belastungen, wie zum Beispiel aerodynamischen Kräften, Beschleunigungslasten und Vibrationslasten und verschiedensten Stoßbelastungen, standhalten müssen. Diese Bauteile müssen also steif, belastbar und dauerfest sein, sollten aber dennoch mit relativ geringem Ressourcenaufwand, das heißt insbesondere geringem Zeitaufwand und mit geringen Kosten, herstellbar sein.

Für großflächig höher belastete Bauteile werden als Materialien oft glasfaserverstärkte Kunststoffe (abgekürzt mit GFK) eingesetzt. Diese weisen durch die Faserverstärkungen eine inhärente hohe Steifigkeit auf und werden bei Bedarf noch durch einlaminierte Röhren verstärkt oder in Sandwichbauweise mit Waben- oder Schaumstoffkernen ausgebildet. Allerdings können GFK-Bauteile erst ab einer gewissen Mindeststückzahl wirtschaftlich gefertigt werden, da für die Herstellung eine Guss- und Laminierform benötigt wird, die aufgrund der Freiformflächen und der Baugröße kostenintensiv herzustellen ist.

Vor allem bei geringen Stückzahlen wird bei der Herstellung von Verkleidungsbauteilen daher vermehrt auf das Verfahren der additiven Fertigung, das umgangssprachlich auch als 3D-Druckverfahren bezeichnet wird, zurückgegriffen. Dabei können dreidimensionale Außenflächen direkt gedruckt werden und es wird keine separate Fertigungsform mehr benötigt. Die Bauteilsteifigkeit wird bei diesem Verfahren mittels Massivausführung oder Ausbildung von Rippenstrukturen auf der Innenseite erreicht. Leider ist die additive Fertigung mit einem hohen Materialeinsatz sowie langen Bauzeiten und damit hohem Ressourceneinsatz verbunden. Außerdem ist die Bauteilsteifigkeit eingeschränkt, so dass Bauteile, die mit dieser Art von Verfahren hergestellt wurden, nur in Schienenfahrzeugen mit relativ niedriger Geschwindigkeit, wie zum Beispiel Straßenbahnen oder Stadtbahnen, eingesetzt werden.

Es besteht also die Aufgabe, ein ressourcensparendes und zeitsparendes Verfahren zur Herstellung eines hinreichend belastbaren Verkleidungsbauteils für ein Fahrzeug anzugeben und ein solches Verkleidungsbauteil bereitzustellen.

Diese Aufgabe wird durch ein Verfahren zum Herstellen eines Verkleidungsbauteils mit Hybridstruktur für ein Fahrzeug gemäß Patentanspruch 1 und ein Verkleidungsbauteil mit Hybridstruktur gemäß Patentanspruch 15 gelöst.

Bei dem erfindungsgemäßen Verfahren zum Herstellen eines Verkleidungsbauteils mit einer Hybridstruktur für ein Fahrzeug, vorzugsweise ein Schienenfahrzeug, wird eine Schalenstruktur, welche einen leeren Innenraum umgibt, additiv hergestellt. Eine Schalenstruktur umfasst eine konkave Geometrie mit einem Innenraum, der ein Objekt aufnehmen kann. Weiterhin wird zumindest ein Teil des Innenraums der Schalenstruktur mit einer Füllstruktur ausgekleidet. Unter einem Verkleidungsbauteil ist ein die Außenseite des Fahrzeugs bildendes Teil, insbesondere ein Karosserieteil, zu verstehen. Die additive Schalenstruktur ermöglicht eine, insbesondere bei kleinen Stückzahlen kostengünstige, leicht realisierbare Fertigung, insbesondere im Vergleich zu einer Herstellung eines GFK-Bauteils.

Insbesondere bei der Herstellung von Verkleidungsbauteilen mit Freiformflächen bzw. Freiformgeometrien ist die additive Herstellung gegenüber der Herstellung von GFK-Verkleidungsbauteilen deutlich vereinfacht. Neben der Freiformgeometrie kann die Innenseite des Verkleidungsbauteils bzw. der Schalenstruktur des Verkleidungsbauteils durch die additive Vorgehensweise mit Taschen für Einlegeteile oder Sockeln für Einlegeteile und ähnlichem leicht versehen werden. Die Füllstruktur erhöht die Festigkeit, insbesondere die Struktursteifigkeit und die Biegefestigkeit des Verkleidungsbauteils erheblich im Vergleich zu einem additiv hergestellten Verkleidungsbauteil ohne Füllstruktur. Die Füllstruktur wird benötigt, um einen Abstand zwischen den tragenden Querschnittsflächen, insbesondere der Schalenstruktur, zu schaffen, wobei die jeweiligen Schichten schubfest miteinander verbunden sein müssen, um Spannungen zu übertragen. Durch den schubsteifen Abstand der Tragstrukturen zur neutralen Faser einer Biegung wird erreicht, dass das Flächenträgheitsmoment deutlich gesteigert wird. Die Steigerung des Flächenträgheitsmomentes ergibt sich aus dem Abstand des außermittigen Querschnittsschwerpunktes zur Biegelinie im Quadrat multipliziert mit der Querschnittsfläche der außermittigen Tragstruktur. In der Literatur ist dieser Effekt auch als Steiner Anteil bekannt.

Weiterhin werden Ressourcen für eine zeit- und kostenintensive Verrippung der Schalenstruktur, d.h. eine Rippenbildung auf der Innenseite der Schalenstruktur, eingespart. Zudem ergibt sich aufgrund der dämpfenden Eigenschaften der Füllstruktur eine verbesserte Schwingungsdämpfung und Dauerfestigkeit. Wird die Füllstruktur aus einem feuerbeständigen Material hergestellt, wie später im Detail erläutert, so verbessern sich die Brandschutzeigenschaften im Vergleich zu Verkleidungsbauteilen ohne Füllstruktur oder mit Rippenstruktur. Die verbesserte Festigkeit aufgrund der Hybridbauweise ermöglicht die Nutzung von additiv hergestellten Verkleidungsbauteilen auch in höheren Fahrzeugklassen mit erhöhter Geschwindigkeit und erhöhtem Gewicht, wie zum Beispiel Vollzügen insbesondere Hochgeschwindigkeitszügen, oder in höher beanspruchten Fahrzeugbereichen, wie zum Beispiel an Anbauteilen an Drehgestellen, bei denen additiv hergestellte Bauteile aus Kunststoff aufgrund der genannten erhöhten Anforderungen bisher noch nicht eingesetzt wurden.

Das erfindungsgemäße Verkleidungsbauteil mit Hybridstruktur für ein Fahrzeug, vorzugsweise ein Schienenfahrzeug, weist eine additiv hergestellte Schalenstruktur auf. Die Schalenstruktur umgibt einen leeren Innenraum, wobei zumindest ein Teilbereich des Innenraums der Schalenstruktur eine Füllstruktur aufweist. Das erfindungsgemäße Verkleidungsbauteil teilt die Vorteile des erfindungsgemäßen Verfahrens.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie und deren Beschreibungsteilen weitergebildet sein. Zudem können im Rahmen der Erfindung die verschiedenen Merkmale unterschiedlicher Ausführungsbeispiele und Ansprüche auch zu neuen Ausführungsbeispielen kombiniert werden.

In einer Ausgestaltung des erfindungsgemäßen Verfahrens ist die Füllstruktur dazu ausgebildet, ein Verschieben gegenüberliegender Flächen der Schalenstruktur relativ zueinander zu hemmen. Vorteilhaft wird das Flächenträgheitsmoment des Verkleidungsbauteils und damit die Festigkeit des Verkleidungsbauteils gegenüber Fremdeinwirkung erhöht. Die Füllstruktur ist bevorzugt mit der Schalenstruktur in Kontakt und besonders bevorzugt durch Reibung in Kontakt mit dieser oder mit dieser fest verbunden, so dass eine Kraftwirkung auf die Schalenstruktur über die Füllstruktur abgeleitet bzw. gehemmt wird.

In einer Variante des erfindungsgemäßen Verfahrens wird die Füllstruktur fest mit der Schalenstruktur verbunden. Eine feste Verbindung soll bedeuten, dass die Füllstruktur und die Schalenstruktur ohne Gewalteinwirkung nicht mehr voneinander trennbar sind und auch nicht mehr relativ zueinander verschiebbar sind. Vorteilhaft kann aufgrund der festen Verbindung eine erhöhte Kraftübertragung zwischen der Füllstruktur und der Schalenstruktur erfolgen.

In einer Variante des erfindungsgemäßen Verfahrens wird die feste Verbindung durch ein Verkleben der Füllstruktur mit der Schalenstruktur erreicht. Als Klebstoff kann zum Beispiel ein Harz, ein Harzklebstoff, insbesondere ein Epoxidharzklebstoff oder eine andere Art eines Klebstoffs, beispielsweise ein Kunststoffklebstoff, genutzt werden. Der Klebstoff kann aber auch einen Klebstoff umfassen, der Metall, insbesondere Aluminium, mit Kunststoff verbindet, wenn die Füllstruktur ein Metall, insbesondere eine Wabenstruktur aus einem Metall, bevorzugt aus Aluminium, umfasst. Eine Wabenstruktur ermöglicht ein geringes Gewicht der Füllstruktur. Wird sie aus Metall hergestellt, so ergibt sich für die Füllstruktur eine hohe Stabilität und Festigkeit.

In einer Variante des erfindungsgemäßen Verfahrens wird die Schalenstruktur mit einer im Vergleich zum Bauteilquerschnitt dünnen Wandung additiv gefertigt. Bevorzugt liegt die Dicke der Wandung der Schalenstruktur zwischen 1 mm und 10 mm, besonders bevorzugt zwischen 1 mm und 6 mm. Vorteilhaft kann durch die Ausbildung einer dünnen Wandung der Schalenstruktur, die für die additive Fertigung der Schalenstruktur benötigte Materialmenge reduziert werden und der Zeitaufwand für die Fertigung ebenfalls reduziert werden, wobei trotzdem eine notwendige Festigkeit und Robustheit eines mit dem erfindungsgemäßen Verfahren hergestellten Verkleidungsbauteils erreicht wird.

Bevorzugt wird bei dem erfindungsgemäßen Verfahren als Material für die Füllstruktur ein Material mindestens eines der folgenden Materialtypen verwendet:
- Hartschaum,
- Metall,
- eine metallische Schaumstruktur,
- eine metallische Wabenstruktur.

Hartschäume sind Schaumstoffe, die einer Verformung unter Druckbelastung einen relativ hohen Widerstand entgegensetzen. Basis-Polymere für Hartschäume umfassen Formaldehyd-Harze, Polystyrol, Polyurethan, Polyisocyanurat und Polyvinylchlorid. Charakteristische Eigenschaften von Hartschäumen sind hohes Dämmvermögen, gute Feuchtigkeitsbeständigkeit und hohe mechanische Festigkeit. Hartschaum hat ein besonders niedriges spezifisches Gewicht und ist mit geringem Ressourcenaufwand herstellbar. Außerdem entspricht Hartschaum auch den Brandschutzbestimmungen.

Füllstrukturen aus Metall, insbesondere die genannten metallischen Schaumstrukturen oder Wabenstrukturen, welche bevorzugt als Material Aluminium umfassen, helfen dabei, das spezifische Gewicht der Füllstrukturen zu reduzieren.

Bevorzugt wird bei dem erfindungsgemäßen Verfahren als Material für die Schalenstruktur ein Material mit einem Hochleistungs-FDM-Thermoplasten (FDM steht für "Fused Deposition Modeling" = Schmelzschichtung) eingesetzt. Beispielsweise umfasst die Schalenstruktur Polyimid-Material. Besonders bevorzugt umfasst die Schalenstruktur ein amorphes Polyimid und ganz besonders bevorzugt ein amorphes Polyimid, das durch den Einbau einer oder mehrerer aromatischer Ether-Gruppen in die Molekülkette eine gute thermoplastische Verarbeitbarkeit aufweist. Ein solches amorphes Polyimid, wegen der eingebauten aromatischen Ether-Gruppe auch als Polyetherimid bezeichnet, kann bevorzugt das Material Ultem aufweisen. Ultem, ein zertifizierter Hochleistungs-FDM-Thermoplast, ist schwer entflammbar bei geringer Rauchentwicklung im Brandfall und verfügt über eine gute Durchschlagfestigkeit bei gleichbleibenden dielektrischen Eigenschaften. Es weist eine hohe Festigkeit über einen weiten Temperatureinsatzbereich und eine ausreichende Wärmeformbeständigkeitstemperatur auf. Andere Materialien für die Schalenstruktur können Polyamid (PA), Polyetheretherketon (PEEK), Polyeterketonketon (PEKK) oder feuerfestes Polyamid (PA FR) umfassen.

Das Verkleidungsbauteil kann auch um eine oder mehrere Lagen von faserverstärktem Material (Glasfaserplatten, Kohlefaser- oder Aramidplatten) ergänzt werden, um durch den Verbund aus additiv gefertigtem Material der Schalenstruktur mit Versteifungskern und faserverstärkten Platten eine weitere Festigkeitssteigerung zu erreichen. Die faserverstärkten Platten werden bevorzugt zwischen der additiv gefertigten Schalenstruktur und der Füllstruktur platziert.

Bevorzugt wird bei dem erfindungsgemäßen Verfahren die Form der Füllstruktur an die Innenform der Schalenstruktur durch eine der folgenden Vorgehensweisen angepasst:
- Zuschneiden der Füllstruktur,
- Thermisches Verformen der Füllstruktur.

Weist die Füllstruktur eine schichtförmige Gestalt auf, so kann die Füllstruktur durch Festlegen und möglicherweise Einzeichnen von Umrissen der Schichtstruktur und Schneiden, vorzugsweise durch einen Heißdraht, entlang dieser Umrisse einfach an die inneren Abmessungen der Schalenstruktur angepasst werden, so dass endkonturnahe Zuschnitte der Füllstruktur entstehen. Weist die Füllstruktur thermoplastische Eigenschaften auf, so kann die Form der Füllstruktur durch thermisches Verformen bzw. in erwärmtem Zustand an die inneren Abmessungen bzw. Konturen der Schalenstruktur angepasst werden.

Bevorzugt wird bei dem erfindungsgemäßen Verfahren die Schalenstruktur als Halbschale ausgeführt und wird die Füllstruktur über die offene Innenseite eingesetzt. Als Halbschale soll eine teilweise bzw. einseitig offene Schalenstruktur verstanden werden. Vorteilhaft ist eine Halbschalenstruktur leicht zugänglich, so dass die Füllstruktur leicht auf der Innenseite der Schalenstruktur eingesetzt werden kann.

Ebenfalls bevorzugt wird die Füllstruktur zur offenen Innenseite hin unbedeckt gelassen. Vorteilhaft kann eine Schutzschicht oder Deckschicht zur offenen Innenseite hin weggelassen werden, da diese Seite dem Fahrzeug zugewandt ist und mit dem Fahrzeug abschließt, so dass ein Schutz gegen äußere Einwirkungen auf die Füllstruktur durch den Fahrzeugkörper selbst gegeben ist.

Weiterhin bevorzugt wird die Füllstruktur zur offenen Innenseite hin mit einer Deckschicht, auch als Innendeckschicht bezeichnet, abgedeckt. Beispielsweise kann eine Versiegelung der Füllstruktur mit Harz erfolgen. Vorteilhaft ist die Füllstruktur durch die Deckschicht gegen Korrosion bzw. allgemein gegen Umwelteinflüsse und gegen ein Eindringen von Flüssigkeiten, insbesondere Wasser, geschützt.

Bevorzugt umfasst bei dem erfindungsgemäßen Verfahren die Deckschicht eine additiv gefertigte Schicht, die auf die Füllstruktur aufgeklebt wird. Die additiv gefertigte Deckschicht kann sehr dünn ausfallen, da sie ja auf der Innenseite nur gegen Korrosion und nicht gegen mechanisches Einwirken schützen muss, so dass der Aufwand für deren Herstellung relativ gering ist. Weiterhin wird durch die additiv gefertigte Deckschicht eine verbesserte Biegesteifigkeit des Verkleidungsbauteils erreicht, indem in den Bereichen der am stärksten belasteten Deckflächen harte additiv hergestellte Elemente angeordnet sind und im Bereich der weniger belasteten Bauteilmitte eine weichere Füllstruktur, wie zum Beispiel eine Hartschaumschicht, angeordnet ist.

Alternativ kann die Deckschicht auch GFK-Material, das eine besonders hohe Festigkeit aufweist, umfassen. Ist die Form der Deckschicht standardisiert, so kann der Aufwand für eine Guss- oder Laminierform, welche für eine Herstellung von GFK-Strukturen erforderlich ist, minimal gehalten werden. Insbesondere bei einer Ausgestaltung der Deckschicht als ebene Schicht, kann eine besonders einfache, standardisierte Fertigung der Deckschicht erfolgen, da die Deckschicht keine dreidimensionale Form aufweist, die durch eine entsprechend ausgebildete Guss- oder Laminierform erzeugt werden müsste.

Die Füllstruktur umfasst besonders bevorzugt eine im fertigen Zustand erwerbbare Verbundplatte. Vorzugsweise umfasst eine solche Verbundplatte einen Schaumkern und eine GFK-Schicht. Besonders bevorzugt umfasst die Verbundplatte einen Infusionsharz-Vinylester-Schaumkern und eine GFK-Gelege-Gelcoat-Beschichtung auf einer oder beiden Außenflächen des Infusionsharz-Vinylester-Schaumkerns. Gelcoat umfasst einen Hartlack, der als Schutzschicht auf GFK-Elementen aufgetragen wird. Vorteilhaft kann der Herstellungsaufwand für die Füllstruktur geringgehalten werden und trotzdem eine hohe Robustheit, Brandbeständigkeit und Wasserdichtigkeit dieser Füllstruktur erreicht werden.

Besonders bevorzugt füllt die Füllstruktur ein auf mechanisch höher belastete Teilbereiche des Verkleidungsbauteils beschränktes Teilvolumen aus. Vorteilhaft kann durch die gezielte Platzierung der Füllstruktur in mechanisch höher belasteten Bereichen eine erhöhte Festigkeit des Verkleidungsbauteils erreicht werden, wobei trotzdem der Materialaufwand für die Füllstruktur auf das Notwendigste beschränkt ist. Vor allem bei Serienbauteilen bieten belastungsoptimierte lokale Verstärkungen hervorragende mechanische Eigenschaften bei geringem Material- und Fertigungsaufwand.

Alternativ umfasst bei dem erfindungsgemäßen Verfahren die Füllstruktur eine ausgedehnte Flächenstruktur. Eine ausgedehnte Flächenstruktur bietet eine gleichmäßig über einen großen Flächenbereich verteilte Stabilisierung des Verkleidungsbauteils, wobei mechanisch stärker belastete und mechanisch weniger stark belastete Teilbereiche gleichmäßig abgedeckt sind.

Bevorzugt wird bei dem erfindungsgemäßen Verfahren eine zusätzliche Zwischenschicht zwischen der Innenseite der Schalenstruktur und der Füllstruktur ausgebildet. Eine solche zusätzliche Zwischenschicht kann durch ein additives Herstellungsverfahren hergestellt werden oder GFK-Material umfassen. Vorteilhaft kann die mechanische Stabilität des Verkleidungsbauteils durch diese Art der Sandwichbauweise weiter verbessert werden.

Ebenfalls bevorzugt wird bei dem erfindungsgemäßen Verfahren ein Befestigungselement zur Befestigung des Verkleidungsbauteils an einem Fahrzeug an der Innenseite der Schalenstruktur des Verkleidungsbauteils befestigt. Das Befestigungselement kann an einem mit der Innenseite der Schalenstruktur fest verbundenen Befestigungssockel, auch als Montagesockel bezeichnet, befestigt, vorzugsweise verschraubt werden oder auch formschlüssig als Winkelelement zwischen die Schalenstruktur und die Füllstruktur gefügt werden und mit diesen Strukturen vorzugsweise verklebt werden.

Statt eines stumpfen Einlaminierens auf den Grundkörper, d.h. die Schalenstruktur, wird bevorzugt als Befestigungselement ein Befestigungswinkel durch die Füllstruktur, vorzugsweise ein Schaumkern, gesteckt und durchdringt diese von der Rückseite zur Innenseite der Schalenstruktur. Diese "Einheit" wird dann flächig auf die Innenseite der Schalenstruktur gefügt. Dadurch entsteht ein Formschluss, welcher großflächiger ist als bei einem reinen Überlaminieren auf der Innenseite und somit deutlich belastbarer ist als bei der Verwendung von einlaminierten Platten, welche mit Schraubgewinden im Inneren der Schalenstruktur befestigt sind.

Das Befestigungselement kann anstatt eines Winkelelements auch eine Durchsteckverbindung, bevorzugt eine Durchsteckschraubverbindung umfassen, die in eine Aussparung der Anordnung aus einer Schalenstruktur und einer Füllstruktur eingefügt bzw. eingeschraubt oder eingeklebt ist. Die Durchsteckschraubverbindung dient zur Aufnahme von Klemmkräften, die aus einer Verschraubung resultieren, so dass die Hybridstruktur, vorzugsweise eine Sandwichstruktur, möglichst wenig Spannungseintrag erfährt. Die Durchsteckschraubverbindung kann durch Schutzelemente nach außen hin zumindest teilweise abgedeckt sein. Durch die Durchsteckschraubverbindung werden bevorzugt Fixierelemente gesteckt, die das Verkleidungsbauteil an einem Fahrzeug fixieren.

Das beschriebene Verkleidungsbauteil umfasst bevorzugt ein Element einer Seitenschürze oder einer Frontschürze eines Fahrzeugs, vorzugsweise eines Schienenfahrzeugs. Seitenschürzen und Frontschürzen müssen erhöhte Belastungen aushalten können, beispielsweise bei einem Kontakt oder Zusammenstoß eines Fahrzeugs, insbesondere eines Schienenfahrzeugs, mit einem anderen stationären oder beweglichen Objekt. Vorteilhaft wird durch die Hybridbauweise eine erhöhte Stabilität und gleichzeitig auch eine gute Elastizität erreicht, um leichte Zusammenstöße abzufedern.

Wird das Verkleidungsbauteil mit einer flächenhaften, sich über einen Teil oder gar über den gesamten Innenbereich erstreckenden Füllstruktur ausgestaltet, so umfasst das Verkleidungsbauteil bevorzugt eine wannenförmige Schalenstruktur.

Vorzugsweise wird die bevorzugt wannenförmige Schalenstruktur mit einer Mehrzahl von Befestigungssockeln, auch als Montagesockel bezeichnet, bevorzugt vier Befestigungssockeln, in ihrem Innenbereich ausgebildet. In den Innenbereich wird die Füllstruktur eingepasst. Die Füllstruktur wird vorzugsweise mit vier Aussparungen in ihrem Randbereich, bevorzugt ihren jeweiligen Eckbereichen ausgebildet, die exakt so positioniert sind, dass durch sie hindurch die Befestigungssockel der Schalenstruktur greifen. Auf der von der Schalenstruktur abgewandten Außenfläche der Füllstruktur wird bevorzugt als Deckschicht eine Innendeckschicht angeordnet, die vorzugsweise ebenfalls additiv hergestellt wird und bevorzugt aus feuerbeständigem Material hergestellt wird. Alternativ oder zusätzlich kann diese Innendeckschicht mit GFK-Materialien hergestellt. An den Montagesockeln wird jeweils eines der bereits erwähnten Befestigungselemente montiert. Die Befestigungselemente dienen der Befestigung des Verkleidungsbauteils an einem betreffenden Fahrzeug.

Weist das erfindungsgemäße Verkleidungsbauteil eine Füllstruktur mit einem auf höher belastete Teilbereiche des Verkleidungsbauteils beschränkten Teilvolumen auf, so wird eine solche stärker strukturierte Füllstruktur bevorzugt mit einer kreuzförmigen Gestalt mit einer Mehrzahl von Schenkeln, bevorzugt vier Schenkeln, ausgebildet, wobei die einzelnen Schenkel des Kreuzes vom Zentrum aus diagonal zum Rand der Schalenstruktur, im Fall eine eckigen Gestalt der Schalenstruktur, zu den Ecken der Schalenstruktur verlaufen. In dem Randbereich, vorzugsweise den Ecken, werden bevorzugt jeweils Montagesockel, auch als Befestigungssockel bezeichnet, angeordnet. Ähnlich wie bei der Variante mit flächenhafter Füllstruktur, werden an der Stelle der Montagesockel in der stärker strukturierten Füllstruktur Aussparungen ausgebildet, durch die die Montagesockel hindurchgreifen. Zur Innenseite des Verkleidungsbauteils hin wird die stärker strukturierte Füllstruktur durch eine vorzugsweise ebenfalls kreuzförmige Schutzabdeckung abgedeckt. Die kreuzförmige Schutzabdeckung weist bevorzugt an der Stelle, an der die Montagesockel angeordnet sind, ebenfalls jeweils Aussparungen auf, durch die die Montagesockel hindurchgeführt werden können. Im Randbereich, bevorzugt in den Ecken der Schalenstruktur, ist vorzugsweise jeweils ein Befestigungselement, vorzugsweise ein winkelförmiges Befestigungselement, mit den bereits erwähnten Montagesockeln verbunden, besonders bevorzugt verschraubt. Vorteilhaft wird im Vergleich zu einer flächenhaften Füllstruktur Material eingespart.

Wird das Verkleidungsbauteil mit einer stärker strukturierten Füllstruktur, die auch als lokale Sandwich-Verstärkung bezeichnet wird, ausgestaltet, kann die Schalenstruktur des Verkleidungsbauteils für eine zusätzliche Stabilisierung mit einer im Vergleich zu herkömmlichen Anordnungen jedoch stark vereinfachten und dezenten Rippenstruktur ausgebildet werden. Die dezente Rippenstruktur kann auch zusätzlich dazu dienen, streifenförmige Füllstrukturen aufzunehmen bzw. zu positionieren. Die streifenförmigen Füllstrukturen werden dabei bevorzugt parallel zueinander zwischen jeweils zwei Montagesockeln angeordnet. Die streifenförmigen Füllstrukturen werden bevorzugt mit zur Innenseite des Verkleidungsbauteils hin offenen schachtelförmigen Schutzabdeckungen, mit denen die Füllstrukturen gegen Korrosion bzw. allgemein gegen unerwünschte äußere Einflüsse geschützt sind, ausgebildet.

Wird das Verkleidungsbauteil mit Befestigungselementen, die Winkelelemente, die formschlüssig zwischen die Schalenstruktur und die Füllstruktur gefügt werden, umfassen, versehen, so wird vorzugsweise ein erster Schenkel eines jeweiligen Befestigungselements waagrecht zur Fläche der Füllstruktur angeordnet und ein zweiter Schenkel eines jeweiligen Befestigungselements vertikal dazu ausgerichtet. Vorzugsweise werden die Befestigungselemente durch Aussparungen in der Füllstruktur geführt und der waagrechte Schenkel eines jeweiligen Befestigungselements wird zwischen der Schalenstruktur und der Füllstruktur angeordnet und besonders bevorzugt mit diesen Strukturen durch eine Klebeschicht fest verbunden bzw. verklebt. Zwischen der Füllstruktur und der Schalenstruktur kann zusätzlich (zu der auf der dazu abgewandten Seite der Füllstruktur angeordneten Innendeckschicht) eine zweite Deckschicht angeordnet sein. In diesem Fall kann der waagrechte Schenkel eines jeweiligen Befestigungselements zwischen dieser zweiten Deckschicht der Füllstruktur und der Schalenstruktur angeordnet werden und besonders bevorzugt mit dieser zweiten Deckschicht und der Innenseite der Schalenstruktur durch eine Klebeschicht verklebt werden. Die innere Schutzschicht bzw. die Innendeckschicht und die zweite Deckschicht werden, falls vorhanden, bevorzugt jeweils mit Aussparungen ausgestaltet, durch die der vertikale Schenkel des jeweiligen winkelförmigen Befestigungselements geführt wird. Vorteilhaft erfolgt ein Kraftfluss bzw. eine Kraftübertragung einer Kraft zwischen dem Verkleidungsbauteil und einem Fahrzeug, an dem das Verkleidungsbauteil über die Befestigungselemente montiert ist, nicht über die additiv hergestellte, als Außenschale funktionierende Schalenstruktur, sondern über die Befestigungselemente, die durch einen großflächigen Formschluss mit der Füllstruktur und der Schalenstruktur, besonders bevorzugt mit der inneren Schutzschicht, d.h. der zweiten Deckschicht der Füllstruktur und der Schalenstruktur verbunden sind.

Die Erfindung wird im Folgenden unter Hinweis auf die beigefügten Figuren anhand von Ausführungsbeispielen noch einmal näher erläutert. Es zeigen:
FIG 1 eine schematische Darstellung eines herkömmlichen Verkleidungsbauteils mit stabilisierenden Rippenstrukturen,
FIG 2 eine Explosionsdarstellung eines Verkleidungsbauteils gemäß einem Ausführungsbeispiel der Erfindung,
FIG 3 eine schematische Darstellung des in FIG 2 gezeigten Verkleidungsbauteils in zusammengefügtem Zustand,
FIG 4 eine Querschnittsdarstellung eines Verkleidungsbauteils mit einer Innendeckschicht gemäß einem Ausführungsbeispiel der Erfindung,
FIG 5 eine Explosionsdarstellung eines Verkleidungsbauteils mit einer sich über den gesamten Innenbereich erstreckenden Füllstruktur sowie eine Darstellung des Verkleidungsbauteils in zusammengesetzter Form gemäß einem Ausführungsbeispiel der Erfindung,
FIG 6 eine Explosionsdarstellung eines Verkleidungsbauteils mit einer selektiv angeordneten Füllstruktur sowie eine Darstellung des Verkleidungsbauteils in zusammengesetzter Form gemäß einem Ausführungsbeispiel der Erfindung,
FIG 7 eine Explosionsdarstellung eines Verkleidungsbauteils mit lokaler Sandwich-Verstärkung sowie eine Darstellung des Verkleidungsbauteils in zusammengesetzter Form gemäß einem Ausführungsbeispiel der Erfindung,
FIG 8 eine Darstellung eines Ausschnitts eines Verkleidungsbauteils mit eingeklebten Befestigungselementen,
FIG 9 eine Darstellung eines Ausschnitts eines Verkleidungsbauteils mit einer Durchsteckschraubverbindung,
FIG 10 ein Flussdiagramm, welches das Verfahren zum Herstellen eines Verkleidungsbauteils für ein Fahrzeug veranschaulicht.

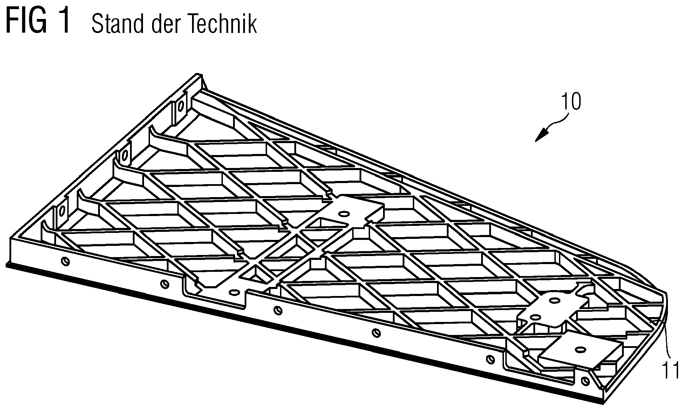

In FIG 1 ist eine schematische Darstellung eines herkömmlichen Verkleidungsbauteils 10 mit stabilisierenden Rippenstrukturen 11 gezeigt. Das Verkleidungsbauteil 10 ist mit einem additiven Herstellungsverfahren gefertigt und weist eine nach innen gewandte Verrippung auf. Aufgrund der relativ komplexen Rippenstrukturen ist der Materialaufwand hoch und die Bauzeit entsprechend lang, was zu einem hohen Ressourcenaufwand bei der Herstellung des Verkleidungsbauteils beiträgt. Insbesondere ist ein solches Verkleidungsbauteil 10 deutlich aufwändiger herzustellen als ein GFK-Bauteil. Die im Vergleich zu einem GFK-Bauteil oder einem massiven additiv hergestellten Verkleidungsbauteils 10 reduzierte Dauerfestigkeit beschränkt den Anwendungsbereich des Verkleidungsbauteils 10.

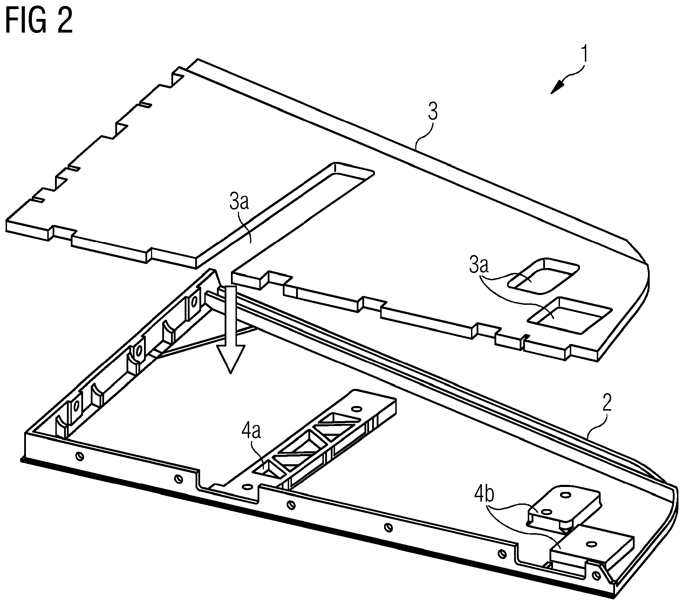

In FIG 2 wird eine Explosionsdarstellung eines Verkleidungsbauteils 1 gemäß einem Ausführungsbeispiel der Erfindung gezeigt. Im unteren Teil von FIG 2 ist eine additiv hergestellte Schalenstruktur 2 gezeigt, welche einen leeren Innenraum umgibt. Im oberen Bereich von FIG 2 ist eine Füllstruktur 3, in diesem Ausführungsbeispiel ein Hartschaumteil, gezeigt. Das Hartschaumteil ist derart zugeschnitten, dass es in den leeren Innenraum der Schalenstruktur 2 hineinpasst. Die Gestalt der Umrisse der Füllstruktur 3 sind durch Zuschneiden an die Umrisse der Schalenstruktur 2 angepasst. Weiterhin weist die Füllstruktur 3 Aussparungen 3a auf, so dass Vorsprünge, Einlegeteile 4a und Montagesockel 4b der Schalenstruktur 2 durch die Füllstruktur 3 hindurchgreifen können.

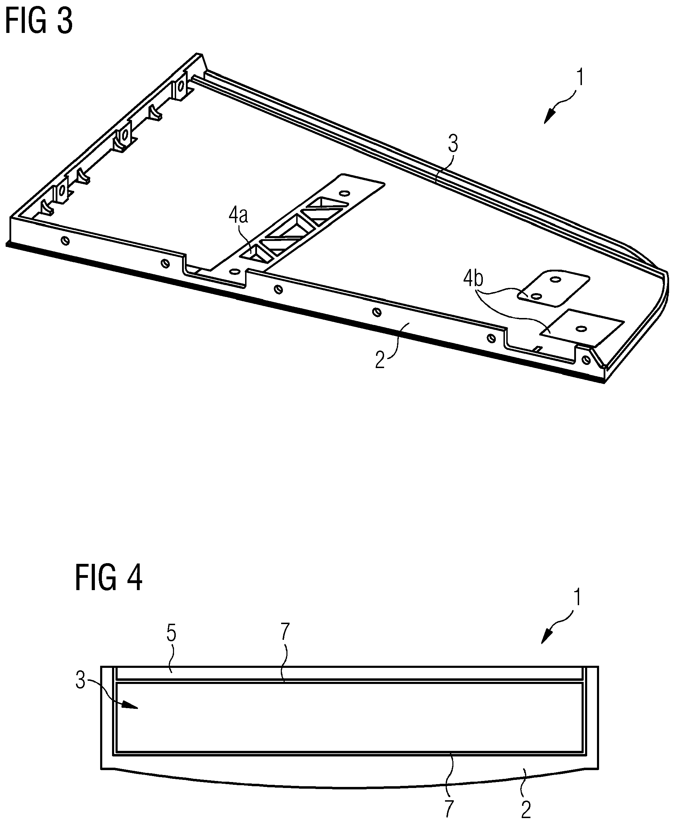

In FIG 3 ist das in FIG 2 bereits gezeigte Verkleidungsbauteil 1 in zusammengesetzter Form veranschaulicht.

In FIG 4 ist eine Querschnittsdarstellung eines Verkleidungsbauteils 1 mit einer Innendeckschicht 5 gemäß einem Ausführungsbeispiel der Erfindung gezeigt. Die Innendeckschicht 5 ist bei bestimmungsgemäßer Montage des Verkleidungsbauteils 1 dem Fahrzeug (nicht gezeigt) zugewandt angeordnet und von au-ßen nicht zu erkennen. Die Innendeckschicht 5 ist mit einer Klebeschicht 7 mit der Füllstruktur 3 verklebt. Die Füllstruktur 3 selbst ist ebenfalls mit einer Klebeschicht 7 mit der Schalenstruktur 2 des Verkleidungsbauteils 1 verbunden.

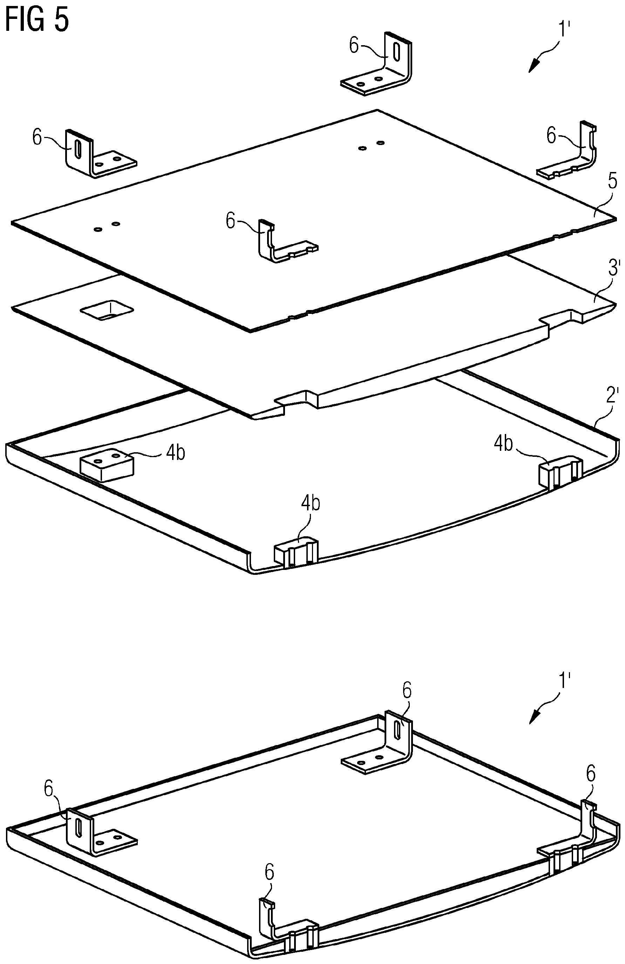

In FIG 5 ist eine Explosionsdarstellung eines Verkleidungsbauteils 1' mit einer flächenhaften sich über den gesamten Innenbereich erstreckenden Füllstruktur 3' sowie eine Darstellung des Verkleidungsbauteils 1' in zusammengesetzter Form gemäß einem Ausführungsbeispiel der Erfindung gezeigt. Das Verkleidungsbauteil 1' umfasst eine wannenförmige Schalenstruktur 2'. Die wannenförmige Schalenstruktur 2' weist vier Montagesockel oder Befestigungssockel 4b im Innenbereich auf. In den Innenbereich wird eine Füllstruktur 3' mit einem Hartschaumkern eingepasst. Die Füllstruktur 3' weist vier Aussparungen in ihren jeweiligen Eckbereichen auf, die exakt so positioniert sind, dass durch sie hindurch die Montagesockel 4b der wannenförmigen Schalenstruktur 2' greifen. Auf der von der wannenförmigen Schalenstruktur abgewandten Außenfläche der Füllstruktur 3' ist eine Innendeckschicht 5 angeordnet, die ebenfalls additiv hergestellt und feuerbeständig ist. An den vier Montagesockeln 4b ist jeweils ein Befestigungselement 6 montiert. Die Befestigungselemente 6 dienen der Befestigung des Verkleidungsbauteils 1' an einem betreffenden Fahrzeug (nicht gezeigt).

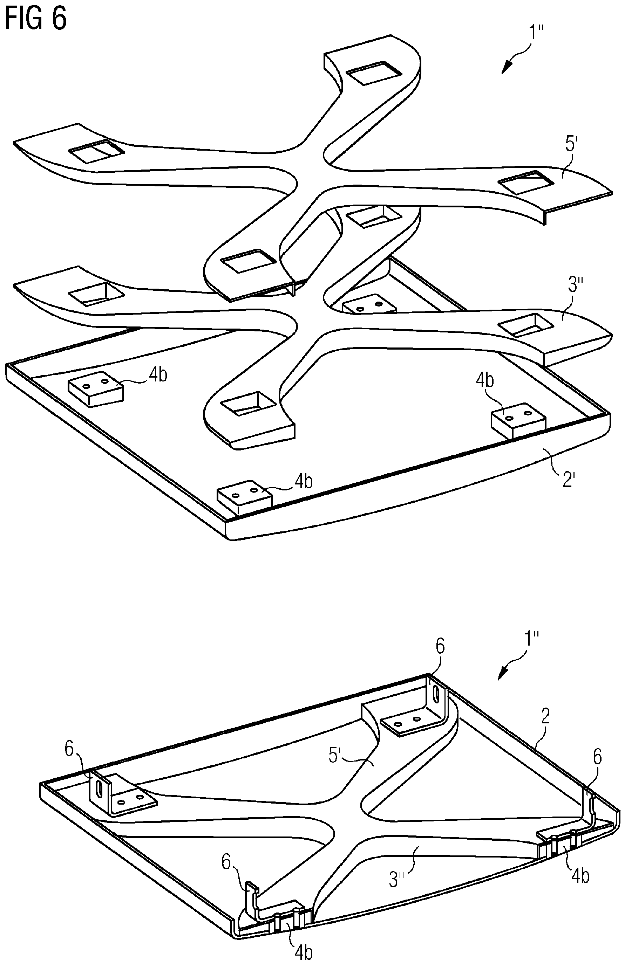

In FIG 6 ist eine Explosionsdarstellung eines Verkleidungsbauteils 1 " sowie eine Darstellung des Verkleidungsbauteils 1" in zusammengesetzter Form gemäß einem Ausführungsbeispiel der Erfindung gezeigt. Die wannenförmige Schalenstruktur 2' des in FIG 6 gezeigten Verkleidungsbauteil 1" weist dieselbe Gestalt wie die wannenförmige Schalenstruktur 2' des in FIG 5 gezeigten Verkleidungsbauteils 1' auf. Im Unterschied zu diesem umfasst das in FIG 6 gezeigte Verkleidungsbauteil 1" eine stärker strukturierte Füllstruktur 3", die eine Art kreuzförmige Gestalt mit vier Schenkeln hat, wobei die einzelnen Schenkel des Kreuzes vom Zentrum aus diagonal zu den Ecken der wannenförmigen Schalenstruktur 2' verlaufen, wo sich jeweils Montagesockel 4b, auch als Befestigungssockel bezeichnet, befinden. An der Stelle der Montagesockel 4b weist die stärker strukturierte Füllstruktur 3" viereckige Aussparungen auf, durch die die Montagesockel 4b hindurchgreifen. Zur Innenseite des Verkleidungsbauteils 1" hin wird die stärker strukturierte Füllstruktur 3" durch eine ebenfalls kreuzförmige Schutzabdeckung 5' abgedeckt. Die kreuzförmige Schutzabdeckung 5' weist an der Stelle, an der die Montagesockel 4b angeordnet sind, ebenfalls jeweils viereckige Aussparungen auf, durch die die Montagesockel 4b hindurchgeführt werden können. In dem Bild unten in FIG 6 ist das Verkleidungsbauteil 1" in zusammengesetzter Form veranschaulicht. In den vier Ecken der wannenförmigen Schalenstruktur 2' ist jeweils ein winkelförmiges Befestigungselement 6 mit den bereits erwähnten Montagesockeln 4b verschraubt.

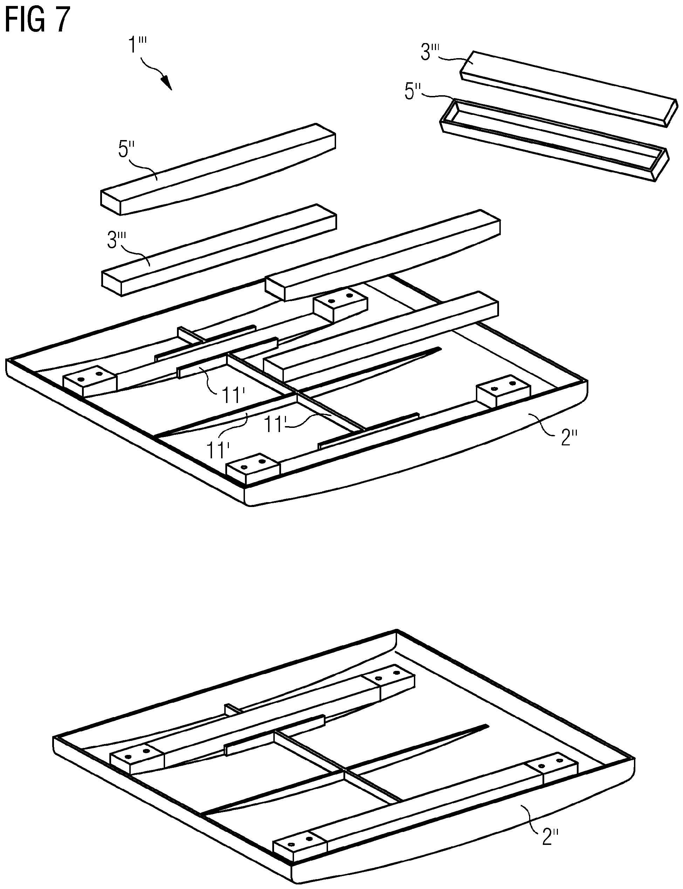

In FIG 7 ist eine Explosionsdarstellung eines Verkleidungsbauteils 1‴ sowie eine Darstellung des Verkleidungsbauteils 1‴ in zusammengesetzter Form mit lokaler Sandwich-Verstärkung gemäß einem Ausführungsbeispiel der Erfindung veranschaulicht. Das in FIG 7 dargestellte Verkleidungsbauteil 1‴ weist eine wannenförmige Schalenstruktur 2ʺ mit einer im Vergleich zum Stand der Technik stark vereinfachten und dezenten Rippenstruktur 11', die teilweise zur Stabilisierung der wannenförmigen Schalenstruktur 2ʺ dient und zum Teil dazu dient, streifenförmige Füllstrukturen 3‴ aufzunehmen bzw. zu positionieren. Die streifenförmigen Füllstrukturen 3‴ sind parallel zueinander zwischen jeweils zwei Montagesockeln 4b angeordnet. Die streifenförmigen Füllstrukturen 3‴ weisen zur Innenseite des Verkleidungsbauteils 1‴ hin offene schachtelförmige Schutzabdeckungen 5ʺ auf.

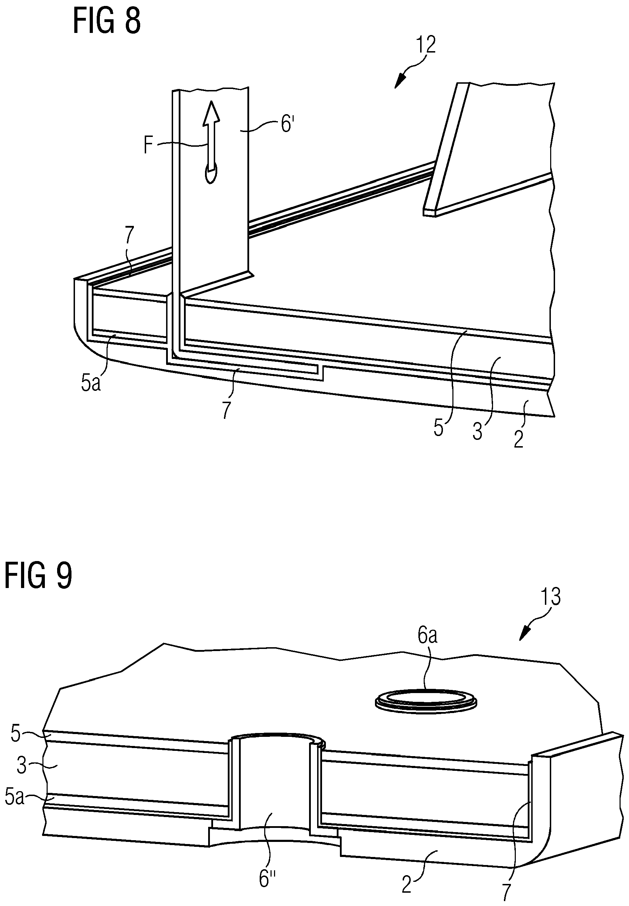

In FIG 8 ist eine Darstellung 12 eines Ausschnitts eines Verkleidungsbauteils mit eingeklebten Befestigungselementen 6' gezeigt. Die Befestigungselemente 6' sind winkelförmig ausgebildet, wobei ein erster Schenkel eines jeweiligen Befestigungselements 6' waagrecht angeordnet ist und ein zweiter Schenkel eines jeweiligen Befestigungselements 6' vertikal ausgerichtet ist. Bei der in FIG 8 gezeigten Variante sind die Befestigungselemente 6' durch Aussparungen in der Füllstruktur 3 geführt und der waagrechte Schenkel eines jeweiligen Befestigungselements 6' ist zwischen der Schalenstruktur 2 und einer der Schalenstruktur 2 zugewandten zweiten Deckschicht 5a der Füllstruktur 3 angeordnet und mit diesen Strukturen durch eine Klebeschicht 7 verklebt. Die innere Schutzschicht bzw. Innendeckschicht 5 und die zweite Deckschicht 5a weisen jeweils Aussparungen auf, durch die der vertikale Schenkel des jeweiligen winkelförmigen Befestigungselements 6' geführt ist. Vorteilhaft erfolgt ein Kraftfluss bzw. eine Kraftübertragung einer Kraft F zwischen dem Verkleidungsbauteil und einem Fahrzeug, an dem das Verkleidungsbauteil, montiert ist, nicht über die additiv hergestellte, als Außenschale funktionierende Schalenstruktur, sondern über die Befestigungselemente 6", die durch einen großflächigen Formschluss mit der inneren Schutzschicht, d.h. der zweiten Deckschicht 5a der Füllstruktur 3 verbunden sind.

In FIG 9 ist eine Darstellung 13 eines Ausschnitts eines Verkleidungsbauteils mit einer Durchsteckschraubverbindung 6ʺ gezeigt. Die Durchsteckschraubverbindung 6ʺ ist durch die Schalenstruktur 2, die Schutz- bzw. Deckschichten 5, 5a und durch die Füllstruktur 3 hindurchgeführt. Die Durchsteckschraubverbindung 6ʺ kann durch Schutzelemente 6a nach außen hin zumindest teilweise abgedeckt sein. Durch die Durchsteckschraubverbindung 6ʺ können Fixierelemente gesteckt werden, die das Verkleidungsbauteil an einem Fahrzeug fixieren. Die Durchsteckschraubverbindung 6ʺ dient zur Aufnahme von Klemmkräften die aus einer Verschraubung resultieren, so dass die Sandwichstruktur des Verkleidungsbauteils möglichst wenig Spannungseintrag erfährt.

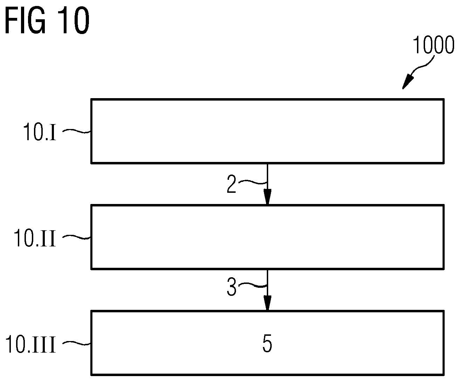

In FIG 10 ist ein Flussdiagramm 1000 gezeigt, welches das Verfahren zum Herstellen eines Verkleidungsbauteils 1 für ein Fahrzeug gemäß einem Ausführungsbeispiel der Erfindung veranschaulicht.

Bei dem Schritt 10.I wird eine Schalenstruktur 2, welche einen leeren Innenraum umgibt, additiv hergestellt.

Bei dem Schritt 10.II wird der Innenraum der Schalenstruktur 2 mit einer Füllstruktur 3, welche Hartschaum aufweist, ausgekleidet.

Bei dem Schritt 10.III wird die Füllstruktur 3 zur Innenseite der Schalenstruktur 2 hin mit einer Deckschicht 5 als Schutzabdeckung versiegelt.

Die Schichten sollen fest miteinander verbunden sein, um Schubspannungen übertragen zu können. Dies kann beispielsweise durch einen Stoffschluss bzw. eine Klebung erfolgen, alternativ kann der Verbund auch oder zusätzlich durch einen Formschluss hergestellt werden.

Es wird abschließend noch einmal darauf hingewiesen, dass es sich bei den vorbeschriebenen Verfahren und Vorrichtungen lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können.

## Patentansprüche

1. Verfahren zum Herstellen eines Verkleidungsbauteils (1, 1', 1", 1‴) mit Hybridstruktur für ein Fahrzeug, aufweisend die Schritte:
- additives Herstellen einer Schalenstruktur (2, 2', 2"), welche einen Innenraum umgibt,
- Auskleiden zumindest eines Teils des Innenraums der Schalenstruktur mit einer Füllstruktur (3, 3', 3ʺ, 3‴).

2. Verfahren nach Anspruch 1, wobei die Füllstruktur (3, 3', 3", 3‴) dazu ausgebildet wird, ein Verschieben gegenüberliegender Flächen der Schalenstruktur (2, 2', 2ʺ) relativ zueinander zu hemmen.

3. Verfahren nach Anspruch 1 oder 2, wobei die Füllstruktur (3, 3', 3ʺ, 3‴) fest mit der Schalenstruktur (2, 2', 2ʺ) verbunden wird.

4. Verfahren nach Anspruch 3, wobei die feste Verbindung durch ein Verkleben der Füllstruktur (3, 3', 3ʺ, 3‴) mit der Schalenstruktur (2, 2', 2ʺ) erreicht wird.

5. Verfahren nach einem der vorstehenden Ansprüche, wobei die Schalenstruktur (2, 2', 2ʺ) mit einer im Vergleich zum Bauteilquerschnitt dünnen Wandung additiv gefertigt wird.

6. Verfahren nach einem der vorstehenden Ansprüche, wobei als Material für die Schalenstruktur (2, 2', 2ʺ) amorphes Polyimid verwendet wird.

7. Verfahren nach einem der vorstehenden Ansprüche, wobei als Material für die Füllstruktur (3, 3', 3ʺ, 3‴) ein Material mindestens eines der folgenden Materialtypen verwendet wird:
- Hartschaum,
- Metall,
- eine metallische Schaumstruktur,
- eine metallische Wabenstruktur.

8. Verfahren nach einem der vorstehenden Ansprüche, wobei die Form der Füllstruktur (3, 3', 3ʺ, 3‴) an die Innenform der Schalenstruktur (2, 2', 2ʺ) angepasst wird, durch eine der folgenden Vorgehensweisen:
- Zuschneiden der Füllstruktur (3, 3', 3ʺ, 3‴),
- Thermisches Verformen der Füllstruktur (3, 3', 3ʺ, 3‴).

9. Verfahren nach einem der vorstehenden Ansprüche, wobei die Schalenstruktur (2, 2', 2ʺ) als Halbschale ausgeführt wird und die Füllstruktur (3, 3', 3ʺ, 3‴) über die offene Innenseite der Schalenstruktur (2, 2', 2ʺ) eingesetzt wird.

10. Verfahren nach Anspruch 9, wobei die Füllstruktur (3, 3', 3ʺ, 3‴) zur offenen Innenseite des Verkleidungsbauteils (1, 1', 1ʺ, 1‴) hin unbedeckt gelassen wird.

11. Verfahren nach Anspruch 9, wobei die Füllstruktur (3, 3', 3ʺ, 3‴) zur offenen Innenseite des Verkleidungsbauteils (1, 1', 1ʺ, 1‴) hin mit einer Deckschicht (5, 5', 5ʺ) abgedeckt wird.

12. Verfahren nach Anspruch 11, wobei die Deckschicht (5, 5', 5ʺ) eine additiv gefertigte Schicht umfasst, die auf die Füllstruktur (3, 3', 3ʺ, 3‴) aufgeklebt wird.

13. Verfahren nach einem der vorstehenden Ansprüche, wobei die Füllstruktur (3, 3') derart ausgebildet wird, dass sie eine Flächenstruktur umfasst.

14. Verfahren nach einem der vorstehenden Ansprüche, wobei die Füllstruktur (3", 3‴) derart ausgebildet wird, dass sie ein auf höher belastete Teilbereiche des Verkleidungsbauteils (1ʺ, 1‴) beschränktes Teilvolumen ausfüllt.

15. Verkleidungsbauteil (1, 1', 1ʺ, 1‴) mit Hybridstruktur für ein Fahrzeug, wobei das Verkleidungsbauteil (1, 1', 1ʺ, 1‴) eine additiv hergestellte Schalenstruktur (2, 2', 2ʺ), welche einen Innenraum umgibt, umfasst, wobei zumindest ein Teilbereich des Innenraums der Schalenstruktur (2, 2', 2ʺ) eine Füllstruktur (3, 3', 3ʺ, 3‴) aufweist.
